# EUROPEAN PATENT APPLICATION

(11) **EP 1 691 292 A1**
(43) Date of publication of application: **16.08.2006**
(21) Application number: 04799820.8
(22) Date of filing: 18.11.2004
(51) Int. Cl.: G06F 12/00, G06F 12/14, G11B 20/10, G11B 20/12

(54) **INFORMATION RECORDING DEVICE AND INFORMATION RECORDING CONTROL PROGRAM**

(30) Priority: 01.12.2003 JP 2003401339
(71) Applicant: Konica Minolta Photo Imaging, Inc., Shinjuku-ku, Tokyo 163-0512 (JP)
(72) Inventor: UEDA, Yutaka, c/o Konica Minolta Photo, Hachioji-shi, Tokyo 192-8505 (JP); TAKEMURA, Koji, c/o Konica Minolta Photo, Hachioji-shi, Tokyo 192-8505 (JP)
(74) Representative: Gille Hrabal Struck Neidlein Prop Roos
(86) International application number: PCT/JP2004/017532
(87) International publication number: WO 2005/055063

(57) **Abstract**

In the case where the information data recorded in the recording medium is recorded in a predetermined area of the recording means, the detection whether the identification information for identifying the recording medium is attached, is conducted, when the identification information is attached, a predetermined area is selected based on the functional structure, physical structure or logical structure of the recording means, and the information recorded in the recording medium is automatically recorded in the selected area.

## Description

### TECHNICAL FIELD

The present invention relates to an information recording apparatus by which the information recorded in a recording medium is recorded in a recording means, and to an information recording control program.

### BACKGROUND ART

Recently, it becomes a present state that various services relating to photography are provided. For example, the user takes a picture by a digital camera, the digital camera in which an image file is recorded or a medium for the digital camera is bought into a photographic shop such as a mini-lab, and by using a unmanned terminal (kiosk) or a shop terminal, the image data recorded in the digital camera or medium can be written in a recording medium such as CD-R, DVD-R.

Further, a service in which, in the image data read from the digital camera or medium, film, a file format is converted so that it can be reproduced by an image reproduction device such as, for example, a DVD player or a DVD recorder, and the original image data and the converted image data are written in a recording medium such as CD-R, DVD-R, is also conducted.

Then, the user can utilize the image data in such a manner that he inserts the recording medium in which the image data is written into the personal computer, conducts the display, edition, image processing of the image data by using an application such as slide show program installed in the personal computer, or inserts the recording medium into an image reproduction device and displays the image data. Further, the above recording medium is not only used by the user himself who provides the image data, but also used for a purpose to present the photographic image to a friend to whom he wants to show it.

Well, when the image data recorded in the recording medium is copied (overwritten) in a hard disk drive (hereinafter, called HDD) housed in the information recording device such as personal computer, it has been conducted that user manually stores it in an arbitrary recording area of the HDD. Further, when the digital camera in which the image data is recorded, is connected to the information recording device, a method by which the image data is automatically stored, is proposed (for example, Tokkaihei No. 08-069684).

However, in the above official gazette, because the security of the data storage to the recording area in which the data is stored, is not considered, when a trouble is generated in the recording area, there is a possibility that the recorded image data is lost. For example, in the case where the image data is stored in HDD in which the operating system (hereinafter, called OS) of the personal computer is stored, when a software having the hostile such as virus or warm is entered, because there is a behavior that it damages OS, there is a possibility that, in the area in which OS is stored, the data is changed or deleted, and there is a possibility that a damage happens also to the image data stored in the same HDD. Further, when the image data is stored in HDD in which each kind of application is stored, because there is a possibility that the execution area of the application is compressed, there is a possibility that a large burden is brought to each kind of processing.

### DISCLOSURE OF THE INVENTION

The present is to provide an information recording apparatus and an information recording control program, by which the information recorded in the recording medium can be recorded in the safe area.

The present invention is provided with, in the information recording apparatus by which the information recorded in the recording medium is recorded in a predetermined area of a recording means, a selection means by which the predetermined area is selected according to the design specification of the recording means, and a means by which the information is automatically recorded in the predetermined area.

Herein, the recording medium is a recording medium such as CD-ROM, CD-R, CD-RW, DVD-ROM, DVD-RAM, DVD ± R, DVD ± RW, blue ray disk, MO, smart media, compact flash (trademark), memory stick (trademark), SD memory card, multimedia card, and a photographic apparatus having a recording medium such as the digital camera, a cell-phone with a camera function. Further, the information is the information data such as the static image data, moving image data, music voice data, contents data, application data.

Further, the present invention is further provided with a identification information detection means for detecting whether the identification information which discriminates the recording medium is attached to the recording medium, and when the identification information is attached to the recording medium, the selection means is conducted, and has a means by which the information is automatically recorded in the predetermined area.

Further, it is preferable that the design specification of the recording means is a functional structure, physical structure or logical structure, of the recording means.

Herein, the functional structure is a structure of the recording means in which a software for realizing a predetermined function is stored, the physical structure is a structure such as the number or the kind of the recording means connected to the information recording apparatus, and the logical structure is a structure in which a partition setting is conducted to the recording medium.

Further, in the information recording apparatus of the present invention, the selection means has a means by which, when the recording means is structured by a plurality of the recording means which is physically separated, a recording means different from the recording means in which a basic software and/or application software of the information recording apparatus are stored, is selected as the predetermined area.

Herein, the basic software is a software which controls a whole body of the apparatus having the recording means, and the software such as the operating system, further, the application software is a software such as an application designed for a specific object such as a creation of the document, numerical value calculation.

Further, in the information recording apparatus of the present invention, the selection means has, when the recording means is structured by the recording means having a plurality of recording sections which are logically separated, a means by which the recording section different from the recording section in which the basic software and/or application software of the information recording apparatus are stored, is selected as the predetermined area.

Herein, the recording section is a section in which the recording means is logically separated into a plurality of sections by partition setting, and which is used as if a plurality of recording means exist.

Further, the present invention has, in the information recording control program by which the computer is functioned as a means for recording the information recorded in the information recording medium in a predetermined area of the recording means, the selection means by which, based on the design specification of the recording means, the predetermined area is selected, and the information recording control program by which the computer is functioned as a means by which the information is automatically recorded in the predetermined area.

Herein, the computer is an apparatus in which the CPU, ROM, RAM, and I/O, connected by bus, are the basic structure, and includes a micro computer, micro processor, and locations of the apparatus in which they are assembled, (for example, personal computer, DVD player, DVD recorder, HDD recorder, blue ray disc player, blue ray disc recorder, home server, game devices, HDD navigation system) are not matter.

Accordingly, because the program according to the present invention is stored in ROM of the computer, is developed in RAM under the comprehensive control of CPU, and provided to the execution, the technical scope of the computer program of the present invention reaches the apparatus in which the computer in which the program is installed, is hosed (hereinafter, description is the same).

Further, the present invention has the information recording control program by which the computer is functioned as the identification information detection means for detecting whether the identification information for discriminating the recording medium is attached to the recording medium, and when the identification information is detected, according to the structure of the recording means, the predetermined area is selected, and the information is automatically recorded in the predetermined area.

Further, in the information recording control program, it is preferable that the design specification of the recording means is the functional structure, physical structure or logical structure, of the recording area.

Further, in the information recording control program of the present invention, the predetermined area, when the recording means is structured by a plurality of the recording means which are physically separated, has a recording means different from the recording means in which the basic software and/or application software of the information recording apparatus are stored.

Further, in the information recording control program of the present invention, when the recording means is structured by the recording means having a plurality of recording sections which are logically separated, it has a means which makes the predetermined area, a recording section different from the recording section in which the basic software and/or application software of the information recording apparatus are stored.

### BRIEF DESCRIPTION OF THE DRAWINGS

Fig. 1 is a view typically showing the structure of an information recording apparatus 1 according to an embodiment of the present invention.
Fig. 2 is a block diagram showing the structure of the information recording apparatus 1 according to an embodiment of the present invention.
Fig. 3 is a flow chart showing a sequence of the information recording control processing according to an embodiment of the present invention.
Fig. 4 is a view showing an example of the data structure of CD-R according to an embodiment of the present invention.
Fig. 5(a) is a view showing a drive structure of the information recording apparatus 1 according to an embodiment of the present invention.
Fig. 5(b) is a view showing an example of the drive structure after the information data copy of the information recording apparatus 1 according to an embodiment of the present invention.
Fig. 6(a) is a view showing a drive structure of the information recording apparatus 1 according to an embodiment of the present invention.
Fig. 6(b) is a view showing an example of the drive structure after the information data copy of the information recording apparatus 1 according to an embodiment of the present invention.
Fig. 7 is a view showing an example of a drive structure of the information recording apparatus 1 according to an embodiment of the present invention.
Fig. 8 is a view showing an example of the drive structure after the information data copy of the information recording apparatus 1 according to an embodiment of the present invention.
Fig. 9 is a view showing an example of a drive structure of the information recording apparatus 1 according to an embodiment of the present invention.
Fig. 10 is a view showing an example of the drive structure after the information data copy of the information recording apparatus 1 according to an embodiment of the present invention.

### BEST MODE FOR CARRYING OUT THE INVENTION

Referring to the drawings, an embodiment of the present invention will be detailed below.

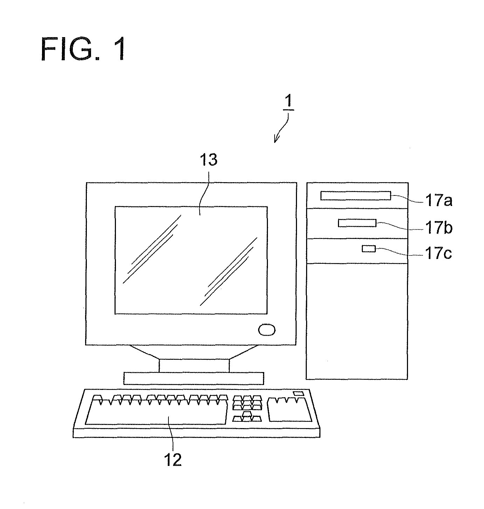

In Fig. 1, an appearance structure of an information recording apparatus 1 according to the present embodiment is shown.

As shown in Fig. 1, the information recording apparatus 1 is provided with a recording medium loading section 17a by which the recording medium 9 such as CD-R or DVD-R, blue ray disk is loaded, a media loading section 17b by which the recording medium such as a smart media, compact flash, memory stick, SD memory card, multimedia card, is loaded, a device connection section 17c for connecting the photographic device which is the recording medium such as the digital camera, cell-phone with the camera, by the wire or wireless, infrared ray, and an input section 12 having button, key-board, mouse, and a display section 13 having LCD (Liquid Crystal Display), CRT (Cathode Ray Tube). Hereupon, although not shown, a control section as a selection means which will be described later, is housed inside the casing.

Hereupon, in the present embodiment, the recording media loading section 17a, media loading section 17b, device connection section 17c, are used as a means for inputting each kind of data such as the image data from the recording medium, however, they may also be used as a means for recording the data which is previously prepared in the recording medium.

Further, in Fig. 1, the personal computer type information recording apparatus 1 is written, however, the type of the information recording apparatus 1 is not limited to this, for example, DVD player, DVD recorder, HDD recorder, blue ray disk player, blue ray disk recorder, home server, game device, HDD navigation system may also be used.

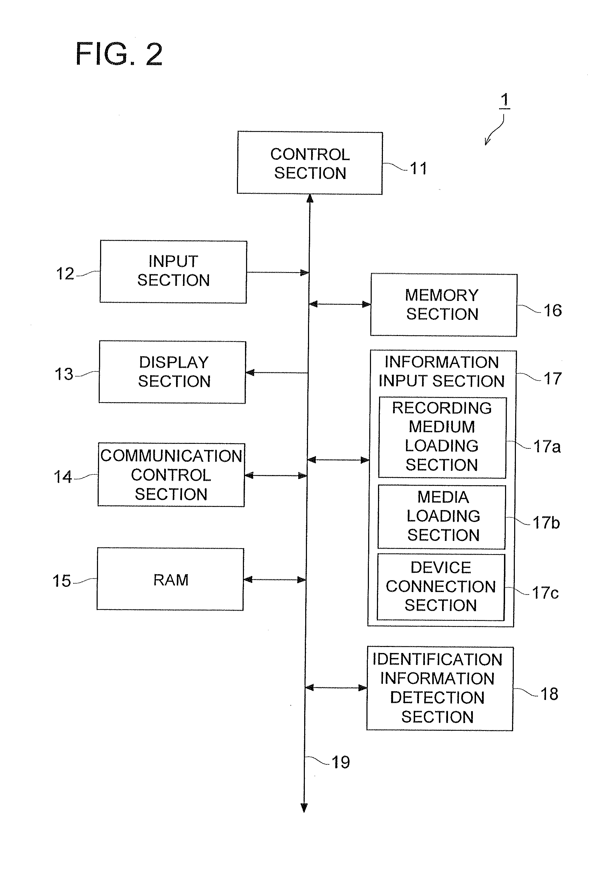

Next, a functional structure of the information recording apparatus 1 will be described by using a block diagram of Fig. 2. In Fig. 2, the information recording apparatus 1 is structured by the control section 11, input section 12, display section 13, communication control section 14, RAM (Random Access Memory) 15, memory section 16, information input section 17, identification information extraction section 18, and each section is connected by the bus 19.

The control section 11 as the selection means is structured by the CPU (Central Processing Unit), not shown, reads each kind of program stored in the memory section 16, develops it into RAM 15, and integrally processes an operation of each part according to the control program. Further, the control section 11 conducts each kind of processing according to the program developed into RAM 15, stores the processing result in RAM 15, and displays on the display section 13. Then, the processing result stored in RAM 15 is stored in a predetermined storage location of the memory section 16.

Specifically, the control section 11 conducts the control detecting the identification information on the identification information detection section 18, from the recording medium which is loaded into or connected to the recording medium loading section 17a, media loading section 17b, device connection section 17c, and conducts each kind of control corresponding to its result. Further, when the identification information is detected by the identification information detection section 18, the control section 11 selects the recording area in which each kind of data recorded in the recording medium is recorded, according to the design specification of HDD which is the memory section 16 provided in the information recording apparatus 1, and according to its result, conducts the control by which each data is recorded in the selected recording area.

The input section 12 is structured by providing with the key board provided with a cursor key, numeral input key, and each kind of function key, and the pointing device such as the mouse, (also for any one, illustration is omitted), and the indication signal inputted by the key operation to the key board or by the mouse operation is outputted to the control section 11. Further, the input section 12 may also provide with the touch panel provided on the display image plane of the display section 13, and through this touch panel, the inputted indication signal is outputted to the control section 11.

The display section 13 is structured by LCD or CRT shown in Fig. 1, and according to the indication of the display signal inputted from the control section 11, displays the input indication or image from the input section 12 on the display image plane.

The communication control section 14 is structured by a LAN board, router, or TA (Terminal Adapter) (for any one, illustration is omitted), and controls the communication conducted between each of devices connected to the network.

RAM 15, in each kind of devices effectively controlled by the control section 11, forms a temporary storage area for the system program which is executable on the information recording apparatus 1, which is read from the memory section 16, control program, input or output data, and parameter.

The memory section 16 as the recording means stores each kind of program or data which is conducted by the control section 11. Specifically, it stores the information recording control program for selecting an area in which each kind of data recorded in the recording medium is recorded. Further, each kind of data such as the image data recorded in the recording medium is recorded in the memory section 16.

The memory section 16 is structured by the magnetic or optical recording medium, or the semiconductor memory. This recording medium may also be a medium fixedly provided in the memory section 16, or a structure so as to be detachably provided, or may also be an external memory apparatus, not shown, connected to the network through the communication control section 14. Hereupon, it is assumed that the number of the structured recording medium is not limited.

The information input section 17 is structured by the recording medium loading section 17a by which the recording medium such as CD-ROM, CD-R, CD-RW, DVD-ROM, DVD R, DVD RW, DVD-RAM, blue ray disk, MO is loaded, the media loading section 17b by which the recording medium such as the smart media, compact flash, memory stick, SD memory card, multi media card, is loaded, and the device connection section 17c by which the photographic device having the recording medium such as the digital camera or the cell phone with the camera is connected by the wire or wireless, infrared ray, and reads the static image data, moving image data, music voice data, contents data, application data (hereinafter, called the information data) recorded in the loaded recording medium or connected device.

The identification information detection section 18 detects, as the identification information detection means, the identification information attached to the recording medium, or the identification information included in IC chip, bar code, two dimensional bar code, provided on the label surface of CD-R, and outputs its result to the control section 11. Hereupon, herein, the identification information means the information used for judging whether CD-R which is the recording medium, is a recording medium for which the information recording control processing, which will be described later, is permitted, for example, the proper information given to the recording medium, manufacturing number information can be used, and when the identification information is attached, it is judged to be the recording medium for which the information recording control processing, which will be described later, is permitted. Hereupon, the identification information may be attached so that it can be detected by the information recording apparatus 1, may also be recorded in any area of CD-R, or may also be coded and attached so that it can be read by a specific information recording apparatus 1.

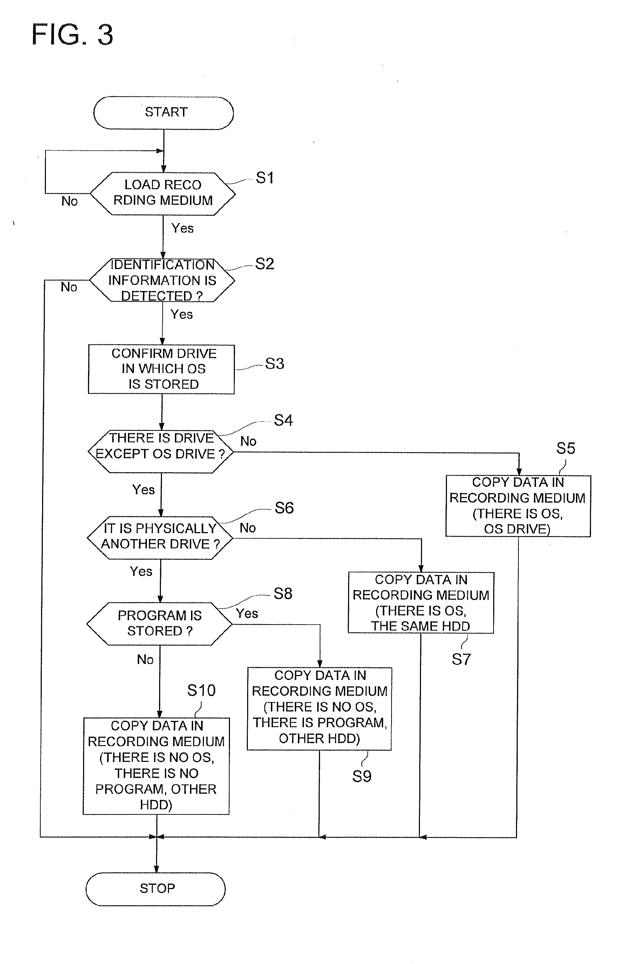

Next, the operation of the present embodiment will be described by referring to Fig. 3.

As an assumption of the operation description, the program for realize each processing written in the following flowchart, is recorded in the memory section 16, in a mode of program code which the computer can read, and the control section 11 conducts the operation according to the program code.

The sequence until the information data in the recording medium is recorded in the memory section 16 of the information recording apparatus 1 by the control section 11 will be described by referring to the flowchart of Fig. 3. Hereupon, in the present embodiment, an example in which the copy of the information data recorded in CD-R as the recording medium loaded into the recording medium loading section 2 is conducted in HDD which is the recording means of the information recording apparatus 1, will be shown.

Initially, when CD-R is loaded in the recording medium loading section 17a (step S1: Yes), it is detected by the identification information detection section 18 whether the identification information is attached to CD-R (step 2), and its result is outputted to the control section 11. Herein, when the identification information is not detected (step S2: No), the present processing is completed at once. In this case, the information data recorded in CD-R is not copied in HDD of the information recording apparatus 1.

On the one hand, when the identification information is detected (step S2: Yes), in HDD housed in the information recording apparatus 1, the drive in which OS in the information recording apparatus 1 is stored, is confirmed (step S3). Herein, the drive shows a recording area of HDD in which OS is formatted controllably, and when a partition is set for one set of HDD, a logical drive which is made as if there are a plurality of sets of HDDs, is included.

Next, it is judged whether, other than the drive (hereinafter, called OS drive), the other drive exists (step S4). Herein, when the other drive (hereinafter, called other drive) does bot exist other than the OS drive, (step S4: None), the copy of the information data recorded in CD-R is automatically conducted in the OS drive (step S5), and the present processing comes to an end.

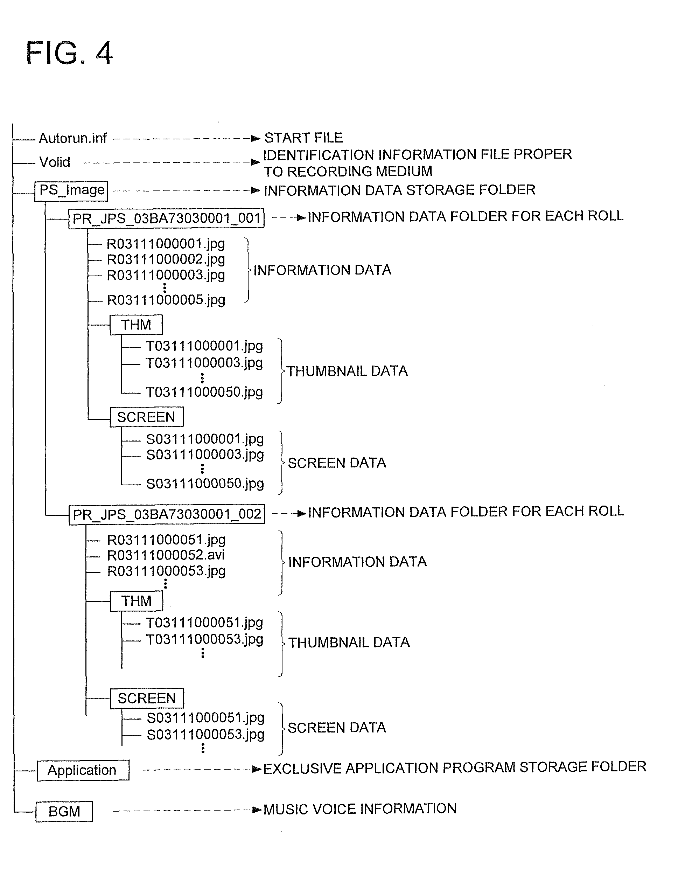

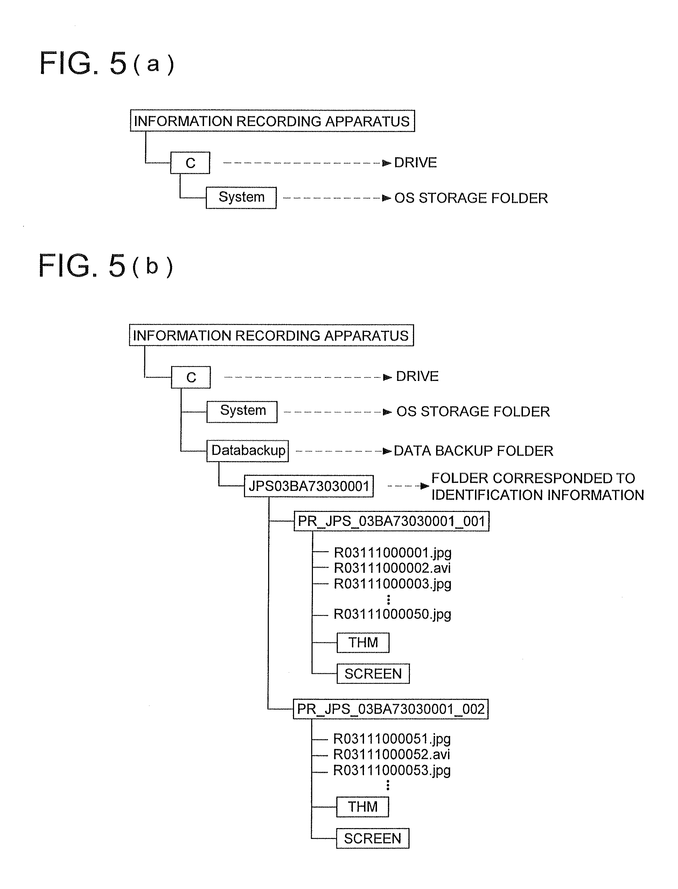

Herein, referring to Fig. 4, and Fig. 5, the data structure before and after the copy of the information data conducted in step S5 will be described.

Fig. 4 is a view showing an example of the data structure of CD-R loaded in the recording medium loading section 17a.
As shown in Fig. 4, CD-R has, when loaded in the information recording apparatus 1, a start file (Autorun. Inf) which starts program recorded in CD-R, an identification information file (info.txt)in which the proper identification information to CD-R is recorded, a storage folder (PS_Image) of the information data, an application folder (Application) in which each kind of program is stored, and the storage folder (BGM) of the music voice data which is on the air as BGM of slide show.

In the image data storage folder (PS_Image), the information data (R03111000001. Jpg) per a plurality of image groups (roll) is stored in the information data folder (PR_JPS_03BA 7303001_001) and recorded. Further, when the information data stored in the information data folder is the image data, the thumbnail data(T03111000001.jpg)corresponding to the image data is stored in the folder (THM), and the screen data (S003111000001.jpg) is stored in the folder (SCREEN) and recorded. Herein, the roll corresponds to the film in the film camera, and indicates a unit which is classified corresponding to the reference such as for each of a predetermined image number or the data amount, for each photographic date.

Fig. 5 is a view showing an example of the drive structure of the information recording apparatus 1.

Fig. 5(a) is a view in which the drive provided in the information recording apparatus 1, and the folder in which OS of the information recording apparatus 1 is stored, are expressed by a tree structure, and shows that below the C drive, OS of the information recording apparatus 1 is stored.

When the C drive is selected by the judgement of step 4, as shown in Fig. 5(b), in step S5, the folder of the identification information (JPS03BA73030001) proper to CD-R is generated in a backup pass below the C drive, and in the generated folder, the information data folder for each roll is copied. In this manner, even when only C drive exists, it is hard to say that the program of the present invention does not conduct the copy on the information recording apparatus 1, and it conducts the copy by the C drive based on the judgement of S4 of the recording area. Hereupon, in step S5, because the drive in which the copy of the information data is conducted, is the same as that of OS, there is a possibility that the influence of the software having the hostility such as virus, or the influence when OS is troubled, is subjected.

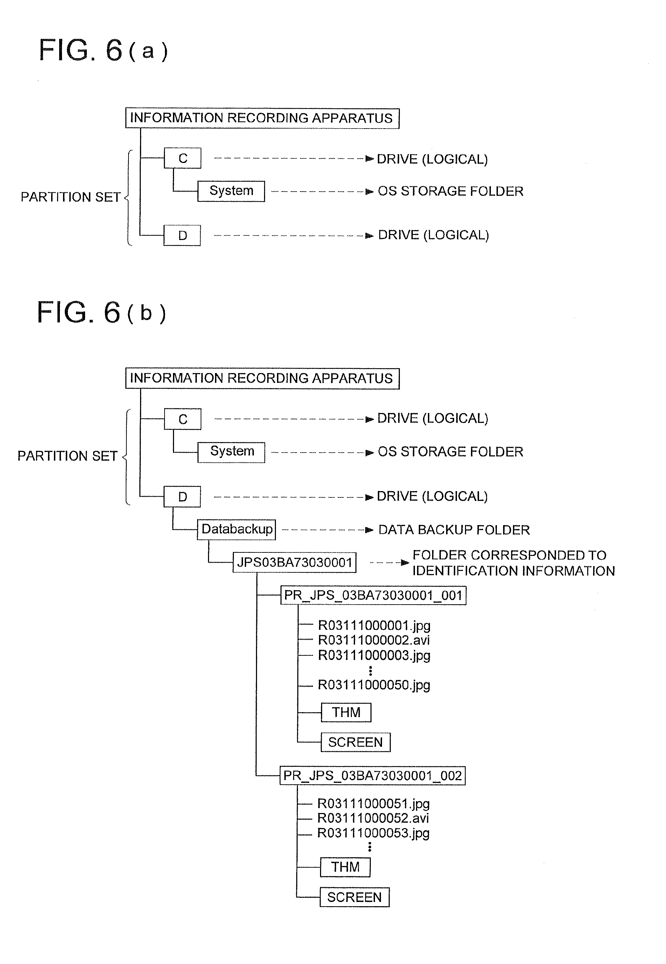

Hereupon, in Fig. 5(b), illustration of the thumbnail data and the screen data is omitted (hereinafter, Fig. 6(b), Fig. 8, Fig. 10 are the same). Further, in the present embodiment, it is assumed that the data following the information data folder for each of roll are copied, however, it is not limited to this, the program recorded in CD-R, music voice information may also be copied.

Returning to Fig. 3, when the existence of the other drive is confirmed in step S4 (step S4: Yes), it is judged whether the physically different drive exists in the other drive (step S6). Herein, physically different means that the information recording apparatus 1 provides with at least more than 2 HDDs, and is under the situation which is controllable as the drive. For example, when one HDD is controlled as 2 drives by OS by the partition setting, it does not correspond to the physically different drive.

When the physically different drive dose not exist in the other drive (step S6; none), the copy of the information data recorded in CD-R is automatically conducted in the other drive except the OS drive (step S7), and the present processing comes to end. In this case, the other drive is the logical drive made by the partition setting, and OS and the information data are recorded on the same HDD.

Referring to Fig. 6, the data structure before and after the copy of the information data conducted in step S7, will be described.

Fig. 6(a) is a view showing an example of the drive structure of the information recording apparatus 1, and the drive provided in the information recording apparatus 1 and the folder in which OS of the information recording apparatus 1 is stored are expressed by the tree structure. Herein, it is shown that, as the logical drive, C drive and D drive set by the partition exist, and OS of the information recording apparatus 1 is stored in below the C drive.

When the D drive is selected by the judgement of step S6, as shown in Fig. 6(b), in step S7, the folder of the identification information (JPS03BA73030001) proper to CD-R is generated in the backup pass below the D drive, and in the generated folder, the information data folder for each roll is copied. Herein, because the drive in which the copy of the information data is conducted in step S7 is the drive different from the OS drive, the possibility that the influence of the software having the hostility such as the virus is subjected is lowered, however, because physically, it exists in the same HDD as OS, there is a possibility that the influence is subjected when the OS is troubled.

Returning to Fig. 3, when the existence of the physically different drive in the other drive is confirmed in step S6 (step S6; Yes), it is judged whether the program is stored in the other drive (step S8). Herein, the program means the application program designed for a certain specific purpose such as the document making which is conducted by the cooperation with the control section 11 and OS, numeric calculation.

When the program is stored in the other drive (step S8; Yes), the copy of the information data recorded in CD-R is automatically conducted in the other drive in which the program is stored (step S9), and the present processing comes to an end.

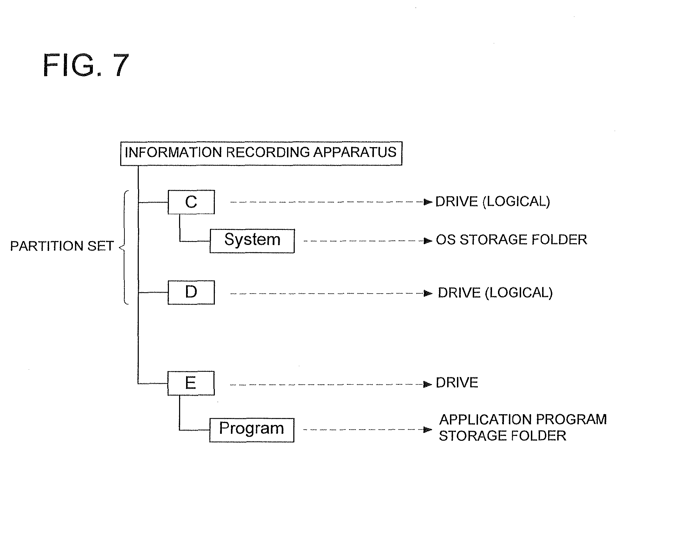

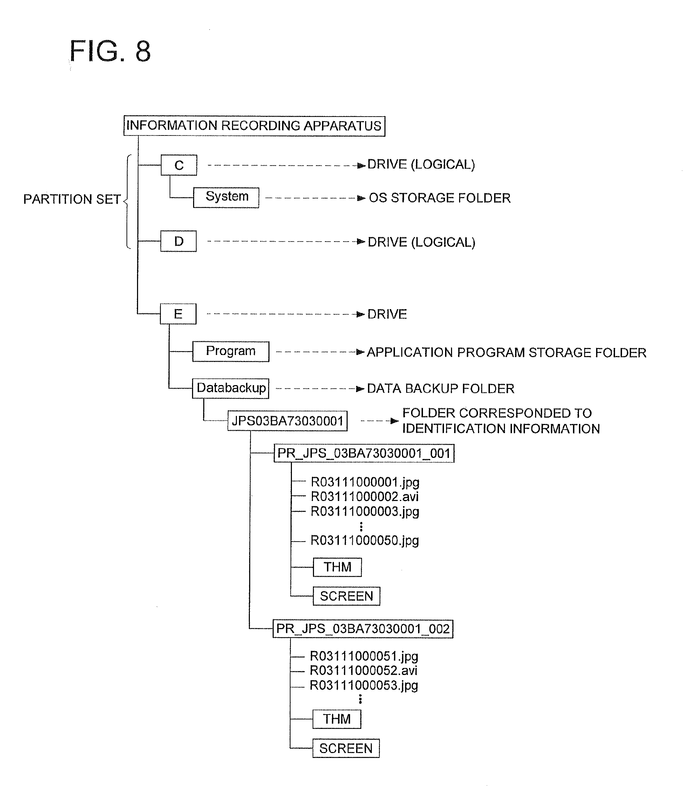

Referring to Fig. 7, Fig. 8, the data structure before and after the copy of the information data conducted in step S9, will be described.

Fig. 7 is a view showing an example of the drive structure of the information recording apparatus 1.

Fig. 7 is a view in which the drive provided in the information recording apparatus 1, and the folder in which OS of the information recording apparatus 1 and the program are stored, are expressed by the tree structure. Herein, C drive and D drive for which the partition is set as the logical drive, exist, and OS of the information recording apparatus 1 is stored in below the C drive, further, in below the E drive physically different from the C, D drives, the structure in which the program is stored, is shown.

When the E drive is selected by the judgement of step S8, as shown in Fig. 8, the folder of the identification information (JPS03BA73030001) proper to CD-R is generated in the backup pass below the E drive, and in the generated folder, the information data folder for each roll is copied. Herein, because the drive in which the information data is copied in step S9 is a drive physically different from the OS drive, the possibility that influence of the software having the hostility such as the virus, and the influence at the time of OS trouble, are subjected, is lowered. However, because it exists in the physically same HDD as the program, there is a possibility that an execution area of each kind of application is compressed, and large load is applied on each kind of processing.

Returning to Fig. 3, when the program does not exist in the other drive (step S8; none), the copy of the information data recorded in CD-R is automatically conducted in the other drive (step S10), and the present processing comes to an end.

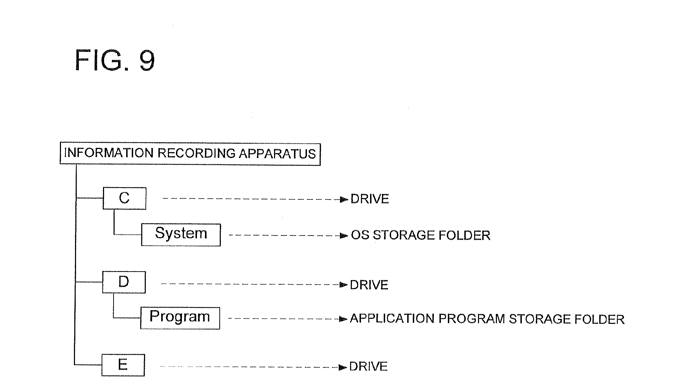

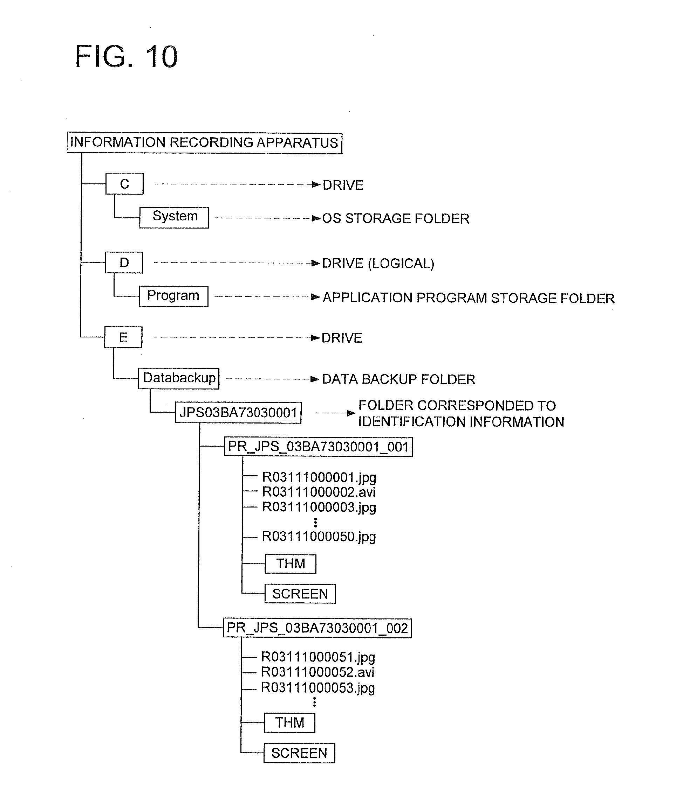

Herein, referring to Fig. 9, Fig. 10, the data structure before and after the copy of the information data conducted in step 10, will be described.

Fig. 9 is a view showing an example of the drive structure of the information recording apparatus 1, and the drive structure of the information recording apparatus 1 and the main folder are expressed by the tree structure. Herein, the information recording apparatus 1 provides with the C drive in which OS of the information recording apparatus 1 is stored, D drive in which the program is stored, and E drive, and are structured by respectively physically different drives.

When the E drive is selected by the judgement of step S8, as shown in Fig. 10, in step 10, the folder of the identification information (JPS03BA73030001) proper to CD-R is generated in the backup pass below the E drive, and in the generated folder, the information data folder for each roll is copied. Herein, because the drive in which the information data is copied in step 10, is a drive physically different from the drive in which OS and the program are stored, the possibility that the influence of the software having the hostility such as the virus and the influence at the time of OS trouble are subjected, is lowered, and the possibility that the execution area of each kind of application is compressed, is also lowered.

As described above, according to the design specification of HDD provided in the information recording apparatus 1, initially, a drive in which the basic software such as OS is not stored, is selected, irrespective of physical, logical, next, a physically different drive is selected, and next, when a drive in which application software such as program is not stored, is selected, the information data can be automatically copied in the recording area having the more safety, corresponding to the design specification of the information recording apparatus 1. Hereupon, an area in which the information data is copied in step S10, is an area having the highest security in the information recording apparatus 1, next, the security is lowered in an order of an area copied in step S9, an area copied in step S7, an area copied in step S5.

In the present embodiment, the judgement whether the physically different drive exists, is made to be prior to the judgement of the drive in which application program is stored, however, it is not limited to the present embodiment, the judgement of the drive in which application program is stored may also be made to be prior to, and it is assumed that corresponding to the working environment or condition, it can be appropriately changed. Hereupon, when the judgement of the drive in which OS is stored is made top priority, it is preferable in the security of the information data.

Further, in the present embodiment, the judgement basis for selecting the conservation area of the information data is conducted according to the characteristic of drive and stored OS, program, however, it is not limited to this, for example, the characteristic of the information data may also be made the judgement basis of the selection, or may also be judged based on the information included in the identification information.

Further, in the present embodiment, the name of the folder in which the information data is stored is made the same as the identification information proper to CD-R, it is not limited to this, although it may also be structured by such a numeric or letter, symbol, it is preferable that it is structured so that the user can easily select, control the information data, and more preferable when it is uniquely structured so that the folder name is not repeated.

Further, in the present embodiment, CD-R is exemplified as the recording medium, it is not limited to this, it may also be the recording medium such as CD-ROM, CD-RW, DVD-ROM, DVD-RAM, DVD ± R, DVD ± RW, blue ray disk, MO, the recording medium such as smart media, compact flash,, memory stick, SD memory card, multi media card, or the recording medium such as a digital camera, cell-phone with a camera.

Hereupon, the description in the present embodiment shows an example of the information recording apparatus according to the present invention, and it is not limited to this. The detailed structure and the detailed operation of the information recording apparatus 1 in the present embodiment, can be appropriately changed within a scope not departing from the spirit of the present invention.

### INDUSTRIAL APPLICABILITY

According to the present invention, in the case where the information recorded in the recording medium is recorded in a predetermined area of the recording means, when a predetermined area is selected according to the design specification of the recording means, and the information recorded in the recording medium is automatically recorded, because the recording area can be selected corresponding to the design specification of the recording means, the information can be recorded in an optimum recording area.

Further, in the case where the information recorded in the recording medium is recorded in a predetermined area of the recording means, when it is detected whether the identification information for identifying the recording medium is attached to the recording medium, when it is attached, a predetermined area is selected according to the design specification of the recording means, and the information recorded in the recording medium is automatically recorded, only the information recorded in the recording medium can be recorded, further, because the recording area can be selected corresponding to the design specification of the recording means, the information can be recorded in an optimum recording area.

Further, because the design specification of the recording means is the functional structure of the recording means, physical structure or logical structure, a predetermined area in which the information is recorded in the more detailed condition, can be selected.

Further, when the recording means is structured from a plurality of the recording means which is physically separated, because the recording means different from the recording means in which OS and/or application is stored is selected as the predetermined area, the information can be recorded in an area having the higher security.

Furthermore, when the recording means is structured by the recording means having a plurality of recording sections which are logically separated, because the recording section different from the recording section in which OS and/or application is stored is selected as the predetermined area, the information can be recorded in an area having the higher security.

## Claims

1. An information recording apparatus which has a predetermined design specification, has a recording means by which the information recorded in a recording medium is recorded in a predetermined area of the recording means, a selection means for selecting the predetermined area based on a predetermined design specification of the recording means, and the information is automatically recorded in the predetermined area.

2. The information recording apparatus written in claim 1, wherein it has an identification information detection means for detecting whether the identification information for identifying the recording medium is attached to the recording medium, and when the identification information is attached to the recording medium, the selection means is conducted, and the information is automatically recorded in the predetermined area.

3. The information recording apparatus written in claim 1, wherein the design specification of the recording means is the functional structure of the recording means, physical structure or logical structure.

4. The information recording apparatus written in claim 1, wherein the selection means, when the recording means is structured from a plurality of recording means which are physically separated, selects a recording means different from the recording means in which the basic software of the information recording apparatus and/or an application software is stored, as the predetermined area.

5. The information recording apparatus written in claim 1, wherein the selection means, when the recording means is structured by the recording means having a plurality of recording sections which is logically separated, selects a recording section different from the recording section in which the basic software of the information recording apparatus and/or an application software is stored, as the predetermined area.

6. In an information recording control program by which a computer is functioned as a means for recording the information recorded in the recording medium in a predetermined area of the recording means, an information recording control program by which a computer is functioned as the selection means for selecting the predetermined area based on the design specification of the recording means, and a means for automatically recording the information in the predetermined area.

7. The information recording control program written in claim 6, wherein it functions the computer as an identification information detection means for detecting whether the identification information for identifying the recording medium is attached to the recording medium, and when the identification information is detected, it selects the predetermined area based on the structure of the recording means, and automatically records the information in the predetermined area.

8. The information recording control program written in claim 6, wherein the design specification of the recording means is the functional structure, physical structure or logical structure of the recording area.

9. The information recording control program written in claim 6, wherein, when the recording means is structured from a plurality of the recording means which are physically separated, the predetermined area is made a recording means different from the recording means in which the basic software of the information recording apparatus and/or application software is stored.

10. The information recording control program written in claim 6, wherein, when the recording means is structured by the recording means having a plurality of recording sections which are logically separated, the predetermined area is made a recording section different from the recording section in which the basic software of the information recording apparatus and/or application software is stored.
